# EUROPEAN PATENT SPECIFICATION

(11) **EP 1 445 478 B1**
(45) Date of publication and mention of the grant of the patent: **22.03.2006**
(21) Application number: 03001636.4
(22) Date of filing: 24.01.2003
(51) Int. Cl.: F02M 61/16, F02M 61/08, F02M 51/06, F16K 41/10

(54) **Sealing element and valve needle for use in a metering device**
Dichtungselement und Ventilnadel für eine Dosiervorrichtung
Elément d'étanchéité et aiguille de soupape pour un dispositif de dosage

(43) Date of publication of application: 11.08.2004
(73) Proprietor: Siemens VDO Automotive S.p.A., 56040 Fauglia (Pisa) (IT)
(72) Inventor: Pulejo, Marco, 56010 Pisa (IT)
(74) Representative: Berg, Peter

(56) References cited:
- EP-A- 1 046 809
- CH-A- 179 551
- DE-A- 3 704 541
- DE-A- 10 054 182
- DE-B- 1 036 575
- DE-C- 380 355

## Description

The present invention relates to a sealing element and a valve needle for use in a metering device for dosing pressurised fluid, particularly an injection valve for a fuel injection system in an internal combustion engine. The metering device is of the type which comprises a chamber within a housing, which chamber comprises said pressurised fluid, a valve needle passing through said chamber, having a valve needle shaft with a first end co-operating with an actuator assembly outside said chamber and a second end controlling the opening and closing of a metering opening, and a sealing element which is used as a feed through element for the first end of said valve needle shaft from inside of the chamber to the outside of the chamber, wherein the inside pressure is higher than the outside pressure and the chamber is sealed to the outside.

Such a metering device is disclosed for example in the European patent application EP 1 046 809 A2.

In the manufacture of piezoelectric actuator-controlled valves for high-pressure direct injection for gasoline engines, it is essential to provide a hydraulic seal capable of isolating the chamber through which the pressurised gasoline travels from the outside containing the actuator assembly.

Fundamental requirements for this sealing element are
- the ability to operate at high pressures, approximately 200 bar, of the fluid and at its related peaks of pressure and at hydraulic ram induced by the opening and closing of the injector needle,
- the guarantee of effectiveness during the whole expected lifetime of the injector, including resistance to breakage, creep, fatigue loading, and the like,
- satisfactory service life of the component in its operating environment, including chemical tolerance to gasoline, resistance to terminal stresses, and the like,
- a minimum number of mechanical parts and a total reliability of the element, and
- minimal material, manufacturing, and assembly times and costs.

In the metering device shown in EP 1 046 809 A2, the sealing element is formed by a metal bellows, an element able to axially deform itself and to guarantee the required separation between the two described volumes, e.g. gasoline in the chamber and the piezostack as an actuator assembly outside. The top and bottom collars of the metal bellows are attached to the injector needle and the valve body, respectively. The metal bellows offers a high mechanical elasticity in the direction of movement of the needle, a sufficient resistance to fuel pressures of up to 500 bar, and a high reliability with respect to leakage throughout the required temperature range of -40 °C to +150 °C. However, an injector with a metal bellows has disadvantages of high component and manufacturing costs, as well as a complex assembly, requiring two hermetic welds.

DE 380 355 C discloses a valve for an internal combustion engine comprising a tubular membrane connected to a valve needle and to a valve housing and thus sealing the valve needle from fuel in a fuel chamber. A valve cone for controlling the opening and closing of a metering opening is screwed on one end of the valve needle and thus fixes the membrane between the valve needle and the valve cone.

CH 179 551 A discloses an injector for an internal combustion engine comprising a membrane connected to a valve needle and to a valve housing. The membrane centers the valve needle while allowing axial movement of the valve needle.

DE 10 36 575 B discloses a valve comprising bellows that are connected to a valve needle and a valve housing and thus sealing a shaft of the valve needle from fuel in a fuel chamber.

DE 37 04 541 A1 discloses a fuel injection valve comprising a centering element designed as a membrane spring and connected to a sealing element for controlling the opening and closing of a metering opening and to a valve housing. The membrane spring comprises slots for compensation of pressure differences between both of its sides.

In view of the foregoing, it is the object underlying the present invention to provide a metering device of the above-mentioned type which is easier and more economic to manufacture, while still fulfilling the requirements specified above.

The above object is achieved by a metering device having the features of appended claim 1.

Advantageous embodiments of the metering device according to the present invention are disclosed in the dependent claims 2 to 9.

A metering device for dosing pressurised fluid according to the present invention, in particular an injection valve for a fuel injection system in an internal combustion engine, comprising a chamber within a housing, comprising said pressurised fluid, and a valve needle passing through said chamber having a valve needle shaft with a first end co-operating with an actuator assembly outside said chamber and a second end controlling the opening and closing of a metering opening according to the present invention comprises a sealing element.

According to the invention, the sealing element comprises an external ring fixable to the housing in a sealed manner, an inner elastic ring fixable to the valve needle shaft providing a metal to metal sealing connection without any weld joint between the valve needle shaft and the sealing element, and a membrane connecting the external ring and the inner elastic ring. Therefore, according to the present invention the laser weld technology is not used any more to hermetically connect the shaft of the valve needle and the sealing element, which laser weld technology, in fact, introduces a high level of stress and deformation into the material of the joined parts that can lead to fatigue cracks and bad alignment between the needle and guiding elements.

Said external ring and/or said inner elastic ring and/or said membrane might be made of metal and the membrane further preferably has a cross section that allows a welding to said external ring and/or said inner elastic ring so that the high pressure fluid within the chamber mainly applies a sheer stress without bending stresses to the welds. To achieve this, the membrane might show a half cycle line cross section bending outwardly from said chamber in an assembled state. Therefore, according to the present invention a high reliability is achieved in respect to the metal bellows disclosed in EP 1 046 809 A2, in particular in the long life of the injector, since the arrangement of the mechanical part that is deformed during operation, here the membrane, shows a higher resistance to breakage and to thermal stresses than the metal bellows so that variations in the rigidity in the several operating conditions are reduced, i.e. a pumping effect, etc.

In an advantageous embodiment of the sealing element according to the present invention, said inner elastic ring provides a clip-like fixation to a cone portion of the valve needle in an assembled state so that a top end of the cone portion that has a diameter corresponding to that of the valve needle shaft is directed to the first end of the valve needle shaft and a base end of the cone portion that has a larger diameter than that of the valve needle shaft so that a cone bottom is formed as a portion protruding from said valve needle shaft is directed to the second end of the valve needle shaft. Therefore, according to this advantageous embodiment of the invention a reduced number of scrap parts are needed during the assembly which leads to no more cracks due to the weld stress. Further, a possibility is given to use a very hard material for the valve needle, which would not be possible when using the laser weld technology. A further advantage is the possibility of recovering the assembled parts by disconnecting them. Therefore, a remarkable reduction in the costs of the elastic sealing is achieved, the production costs are reduced, since no welding on the needle is needed, and the components are easy adaptable to a high series production.

Preferably, said inner elastic ring comprises a through hole with a first surface with a first inner diameter larger than a diameter of the valve needle shaft and smaller than that of the base end of the cone portion, provided in an upper side of the inner elastic ring that is directed to the first end of the valve needle shaft in an assembled state, a second surface with a second inner diameter larger than that of the base end of the cone portion, provided in the middle of the inner elastic ring, a sealing surface connecting the first surface and the second surface, and a protruding surface with a third inner diameter larger than a diameter of the valve needle shaft and smaller than that of the base end of the cone portion, provided between the second surface and a lower side of the inner elastic ring that is directed to the second end of the valve needle shaft in an assembled state.

Said sealing surface preferably has a conical cross section adapted to fit to the cone portion of the valve needle. Said protruding surface preferably protrudes inwardly over the second surface so that during an assembly process, in which the first end of the needle shaft is guided through the through hole of the inner elastic ring coming from the lower side thereof, the cone portion of the valve needle bends said inner elastic ring so much outwardly that its sealing section has a larger diameter than an oppositely thereto arranged section of the cone portion, which diameter is smaller than the oppositely thereto arranged section of the cone portion when no outward bending is performed. Further preferably said protruding surface hooks behind said bottom surface of said cone portion in an assembled state in which no bending of the inner elastic ring is performed due to the protruding surface and in which the sealing surface has a sealing contact with the cone portion.

Such a clip-like fixation provides a particular easy possibility to assemble the sealing element to the valve needle and also the possibility to disassemble those parts without destruction. Further, the proposed metal to metal sealing ensures the fulfilling of the above-defined fundamental requirements for the sealing element.

The invention, both its construction and its method of operation together with additional objects and advantages thereof, will be best understood from the following description of a specific embodiment thereof taken in conjunction with the accompanying drawings, wherein
- Fig. 1: is a schematic axial cross section of a lower part of an injection valve according to the present invention;
- Fig. 2: is a schematic axial cross section of the sealing element and a part of the valve needle in a disassembled state; and
- Fig. 3: shows three schematic axial cross section views of the sealing element and the valve needle according to the present invention in different assembly states.

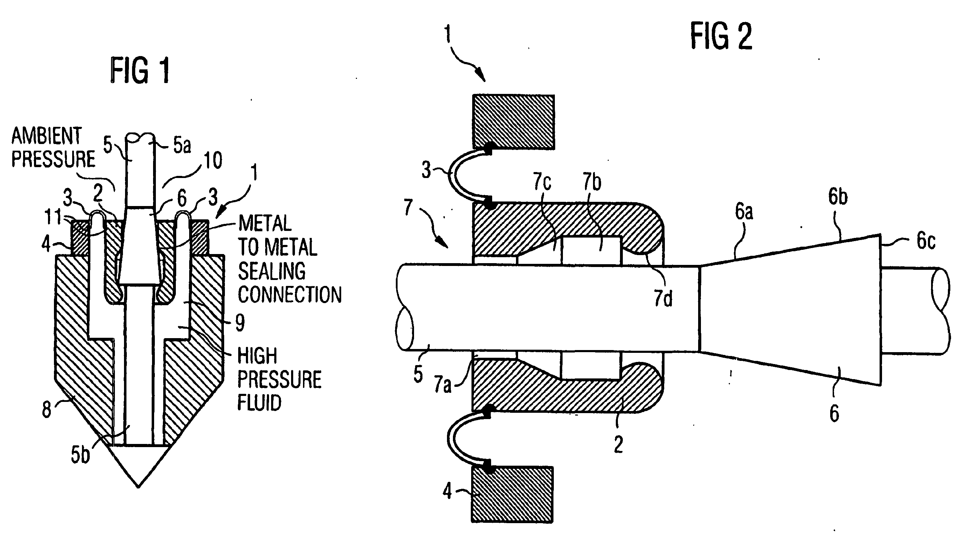

Fig. 1 shows a schematic axial cross section of the lower part of an injection valve according to an embodiment of the present invention. A housing 8 of the valve body contains an outlet passage for the pressurised fluid which terminates with a metering opening opened and closed by a plunger of a valve needle. The plunger is actuated by a second end 5b of a valve needle shaft 5, which first end 5a is actuated by a not shown actuator assembly, e.g. a piezoelectric actuator assembly. The housing comprises a chamber or gasoline area 9 for the pressurised gasoline that is sealed to the outside 10 by a sealing element 1 according to the present invention, through which the valve needle shaft 5 is guided from the outside 10 where the actuator assembly is located through the chamber 9 to the plunger located on the second end 5b of the valve needle shaft 5 that opens and closes the metering opening.

The sealing element 1 according to the present invention comprises an external ring 4 that is hermetically welded to the housing 8 of the valve body, an inner elastic ring 2 that provides a hermetical metal to metal sealing connection to a cone portion 6 of the valve needle, and a membrane 3 that is hermetically welded to the external ring 4 and to the inner elastic ring 2.

Fig. 2 shows the sealing element 1, the valve needle shaft 5 and the cone portion of the valve needle shown in fig. 1 in more detail and in a not completely assembled state. In particular, the cone portion 6 of the valve needle comprises a top end 6a having a diameter corresponding to that of the valve needle shaft 5 and being directed to the first end 5a of the valve needle shaft 5, and a base end 6b that has a larger diameter than that of the valve needle shaft 5 and is directed to the second end 5b of the valve needle shaft 5. Therefore, a cone bottom 6c is formed as a portion protruding from said valve needle shaft 5, in this embodiment in a perpendicular manner.

The inner elastic element 2 comprises a through hole 7, through which the valve needle shaft 5 is guided, so that in an assembled state the cone portion 6 of the valve needle clips in this through hole due to its specific design, and at the same time a hermetical metal to metal sealing connection is established. The through hole 7 comprises a first surface 7a that defines a first inner diameter of the through hole which is larger than a diameter of the valve needle shaft 5 and smaller than that of the base end 6b of the cone portion 6. This first surface is provided at an upper side of the inner elastic ring 2 that is directed to the first end of the valve needle shaft 5 in an assembled state. Further, the through hole 7 comprises a second surface 7b defining a second inner diameter of the through hole that is larger than that of the base end 6b of the cone portion and that is provided in the middle of the inner elastic ring 2. A sealing surface 7c is connecting the first surface 7a and the second surface 7b. The sealing surface defines a conical cross section of the through hole 7 that is adapted to fit to the cone portion 6 of the valve needle. Further, the through hole 7 comprises a protruding surface 7d between the second surface 7b and a lower side of the inner elastic ring that is directed to the second end 5b of the valve needle shaft 5 in an assembled state. The protruding surface 7d defines a third inner diameter of the through hole that is larger than a diameter of the valve needle shaft 5 and smaller than that of the base end 6b of the cone portion 6. The protruding surface 7d might not have a constant third inner diameter, but might have a round or phased form as long as the different inner diameters of the through hole 7 defined thereby satisfy the before-mentioned requirements.

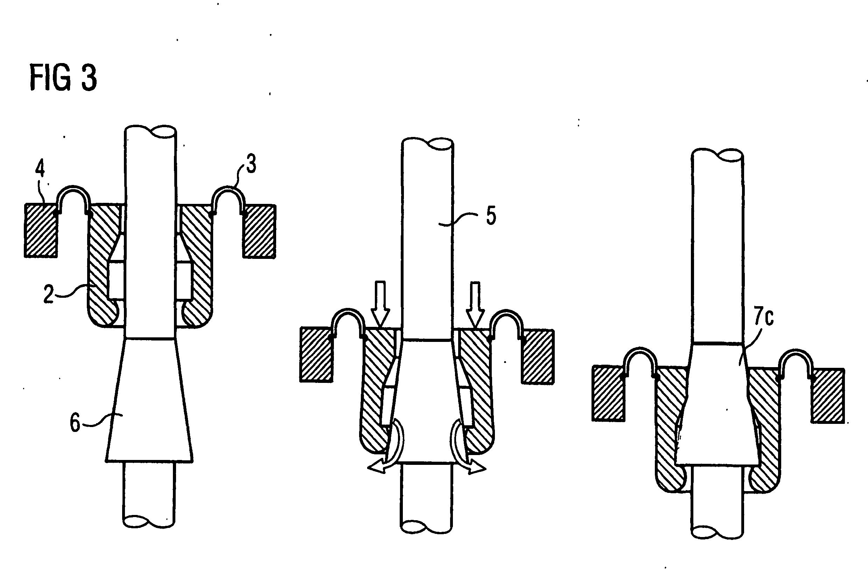

Fig. 3 shows in three phases the assembly of the sealing element according to the present invention, i.e. from an assembly state A as shown in fig. 2 to an assembly state C as shown in fig. 1. As described before in connection with fig. 2, in the assembly state A, as also shown on the left-hand side of fig. 3, the valve needle shaft 5 is guided through the through hole 7 of the sealing element 1 with its top end 5a from the lower side of the inner elastic ring to its upper side. In a further introduction an assembly state B is reached, as shown in the middle of fig. 3, in which the protruding surface 7d goes in contact with the cone portion 6 of the valve needle so that the whole inner elastic ring 2 expands itself elastically and allows the full introduction of the sealing element 1 in its final position on the valve needle, i.e. the cone portion 6 of the valve needle, as it is shown as third assembly state C on the right hand side of fig. 3. During this final step of the assembly process, the protruding surface 7d of the through hole 7 looses the contact with the base end 6b of the cone portion 6 of the valve needle and therefore the inner elastic ring 2 recovers its relaxed shape and the protruding surface 7d hooks behind the bottom surface 6c of the cone portion 6 so that an interference fit is established in the metal to metal sealing area, i.e. at the sealing surface 7c of the through hole 7. Therefore, a metal to metal sealing connection is realised between the axially moveable valve needle and the valve body of the injector, since the external ring of the sealing element is fixed to the housing 8 of the valve body in a sealed manner and the inner elastic ring 2 is fixed to the cone portion 6 of the valve needle in a sealed manner, and the membrane 3 which connects the inner elastic ring 2 and the external ring 4 also provides sealed connections to said elements.

The shape of the membrane 3 is such that the high pressure fluid applies a sheer stress on welds 11 of the membrane 3 to the external ring 4 and the inner elastic ring 2, without bending stresses, which can allow a high fatigue stress resistance. In this particular embodiment the membrane 3 has a half circle line cross section bending outwardly from said chamber 8 in an assembled state.

The membrane 3, the external ring 4 and the inner elastic ring 2 are preferably made of metal.

The features disclosed in the foregoing description, in the drawings, and in the claims may alone as well as in any possible combination be important for the realisation of the invention.

## Claims

1. A metering device for dosing pressurised fluid, in particular an injection valve for a fuel injection system in an internal combustion engine, comprising
- a chamber (9) within a housing (8), comprising said pressurised fluid, and
- a valve needle (5, 6) passing through said chamber, having a valve needle shaft (5) with a first end (5a) cooperating with an actuator assembly outside said chamber and a second end (5b) controlling the opening and closing of a metering opening,
- a sealing element (1) that is used as a feed through element for the first end (5a) of said valve needle shaft (5) from inside the chamber (9) to the outside (10), wherein the inside pressure is higher than the outside pressure and the chamber (9) is sealed to the outside (10),
**characterised in that**
said sealing element (1) comprises an external ring (4) fixed to the housing (8) in a sealed manner, an inner elastic ring (2) fixed to the valve needle shaft (5) providing a metal to metal sealing connection without any weld joint between the valve needle shaft (5) and the inner elastic ring (2), and a membrane (3) connecting the external ring (4) and the inner elastic ring (2).

2. The metering device according to claim 1,
**characterised in that**
said external ring (4) and/or said inner elastic ring (2) and/or said membrane (3) are made of metal.

3. The metering device according to claim 1 or 2,
**characterised in that**
said membrane (3) has a cross section that allows a welding to said external ring (4) and/or said inner elastic ring (2) so that the high pressure fluid within the chamber (9) mainly applies a shear stress without bending stresses to the welds.

4. The metering device according to claim 3,
**characterised in that**
said membrane (3) has a half circle line cross section bending outwardly from said chamber (9) in an assembled state.

5. The metering device according to any of claims 1 to 4,
**characterised in that**
said inner elastic ring (2) provides a clip-like fixation to a cone portion (6) of the valve needle in an assembled state so that a top end (6a) of the cone portion that has a diameter corresponding to that of the valve needle shaft (5) is directed to the first end (5a) of the valve needle shaft (5) and a base end (6b) of the cone portion (6) that has a larger diameter than that of the valve needle shaft (5) so that a cone bottom (6c) is formed as a portion protruding from said valve needle shaft (5) is directed to the second end (5b) of the valve needle shaft (5).

6. The metering device according to claim 5,
**characterised in that**
said inner elastic ring (2) comprises a through hole (7) having
- a first surface (7a) with a first inner diameter larger than a diameter of the valve needle shaft (5) and smaller than that of the base end (6b) of the cone portion (6), provided at an upper side of the inner elastic ring (2) that is directed to the first end (5a) of the valve needle shaft (5) in an assembled state,
- a second surface (7b) with a second inner diameter larger than that of the base end (6b) of the cone portion (6), provided in the middle of the inner elastic ring (2),
- a sealing surface (7c) connecting the first surface (7a) and the second surface (7b), and
- a protruding surface (7d) with a third inner diameter larger than a diameter of the valve needle shaft (5) and smaller than that of the base end (6b) of the cone portion (6), provided between the second surface (7b) and a lower side of the inner elastic ring (2) that is directed to the second end (5b) of the valve needle shaft (5) in an assembled state.

7. The metering device according to claim 6,
**characterised in that**
said sealing surface (7c) has a conical cross section adapted to fit to the cone portion (6) of the valve needle.

8. The metering device according to claim 6 or 7,
**characterised in that**
said protruding surface (7d) protrudes inwardly over the second surface (7b) so that during an assembly process, in which the first end (5a) of the valve needle shaft (5) is guided through the through hole (7) of the inner elastic ring (2) coming from the lower side thereof, the cone portion (6) of the valve needle bends said inner elastic ring (2) so much outwardly that its sealing section (7c) has a larger diameter than an oppositely thereto arranged section of the cone portion (6), which diameter is smaller than the oppositely thereto arranged section of the cone portion (6) when no outward bending is performed.

9. The metering device according to any of claims 6 to 8,
**characterised in that**
said protruding surface (7d) hooks behind said bottom surface (6c) of said cone portion in an assembled state in which no bending of the inner elastic ring (2) is performed due to the protruding surface (7d) and in which the sealing surface (7c) has a sealing contact with the cone portion (6).

## Patentansprüche

1. Dosiervorrichtung zur Dosierung von druckbeaufschlagten Flüssigkeiten, insbesondere einem Einspritzventil für ein Kraftstoffeinspritzsystem in einem Verbrennungsmotor, das Folgendes beinhaltet:
- eine Kammer (9) innerhalb eines Gehäuses (8), die besagte Flüssigkeit enthält, und
- eine Ventilnadel (5, 6), die durch besagte Kammer hindurchgeht und einen Ventilnadelschaft (5) mit einem ersten Ende (5a) hat, das mit einer Stellelement-Baugruppe außerhalb besagter Kammer zusammenarbeitet, und einem zweiten Ende (5b), das das Öffnen und Schließen einer Dosiervorrichtung steuert,
- ein Dichtungselement (1), das als Durchführungselement für das erste Ende (5a) besagten Ventilnadelschaftes von der Innenseite (9) zur Außenseite (10) der Kammer dient, wobei besagter Innendruck höher als der Außendruck ist und besagte Kammer (9) nach außen (10) abgedichtet ist,
**dadurch gekennzeichnet, dass**
besagtes Dichtungselement (1) einen Außenring (4) beinhaltet, der am Gehäuse (8) in abgedichteter Weise fixiert ist, einen elastischen Innenring (2), der am Ventilnadelschaft (5) fixiert ist, wobei eine Dichtungsverbindung von Metall auf Metall ohne Schweißnaht zwischen dem Ventilnadelschaft (5) und dem elastischen Innenring (2) hergestellt wird, sowie eine Membran (3), die den Außenring (4) und den elastischen Innenring (2) verbindet.

2. Dosiervorrichtung nach Anspruch 1,
**dadurch gekennzeichnet, dass**
besagter Außenring (4) bzw. besagter elastischer Innenring (2) bzw. besagte Membran (3) aus Metall bestehen.

3. Dosiervorrichtung nach Anspruch 1 oder 2,
**dadurch gekennzeichnet, dass**
besagte Membran (3) einen Querschnitt hat, der ein Anschweißen an besagten Außenring (4) bzw. besagten elastischer Innenring (2) erlaubt, so dass die mit Hochdruck beaufschlagte Flüssigkeit in der Kammer (9) hauptsächlich eine Scherspannung ohne Biegespannungen auf die Schweißnähte ausübt.

4. Dosiervorrichtung nach Anspruch 3,
**dadurch gekennzeichnet, dass**
besagte Membran (3) einen halbkreisförmigen Querschnitt hat, der sich in montiertem Zustand von besagter Kammer (9) nach außen biegt.

5. Dosiervorrichtung nach einem der Ansprüche 1 bis 4,
**dadurch gekennzeichnet, dass**
besagter elastischer Innenring (2) eine clipartige Fixierung an einem kegelförmigen Anteil (6) der Ventilnadel in montiertem Zustand ermöglicht, so dass ein oberes Ende (6a) des Kegelanteils, das einen Durchmesser hat, der dem des Ventilnadelschaftes (5) entspricht, zum ersten Ende (5a) des Ventilnadelschaftes (5) und zu einem Basisende (6b) des kegelförmigen Anteils (6), das einen größeren Durchmesser als der des Ventilnadelschaftes (5) hat, hin zeigt, so dass ein Kegelboden (6c) gebildet wird, während ein Anteil, der von besagtem Ventilnadelschaft (5) vorsteht, zum zweiten Ende (5b) des Ventilnadelschaftes (5) hin zeigt.

6. Dosiervorrichtung nach Anspruch 5,
**dadurch gekennzeichnet, dass**
besagter elastischer Innenring (2) eine Durchgangsbohrung (7) beinhaltet, die Folgendes hat:
- eine erste Fläche (7a) mit einem ersten Innendurchmesser, der größer als ein Durchmesser des Ventilnadelschaftes (5) und kleiner als der Durchmesser des Basisendes (6b) des kegelförmigen Anteils (6) ist, der an einer Oberseite des elastischen Innenrings (2) angeordnet ist, die in montiertem Zustand zum ersten Ende (5a) des Ventilnadelschaftes (5) hin zeigt,
- eine zweite Fläche (7b) mit einem zweiten Innendurchmesser, der größer als der Durchmesser des Basisendes (6b) des kegelförmigen Anteils (6) ist, der in der Mitte des elastischen Innenrings (2) angeordnet ist,
- eine Dichtungsfläche (7c), die die erste Fläche (7a) und die zweite Fläche (7b) miteinander verbindet, und
- eine vorspringende Fläche (7d) mit einem dritten Innendurchmesser, der größer als ein Durchmesser des Ventilnadelschaftes (5) und kleiner als der Durchmesser des Basisendes (6b) des kegelförmigen Anteils (6) ist, der zwischen der zweiten Fläche (7b) und einer Unterseite des elastischen Innenrings (2) angeordnet ist, die in montiertem Zustand zum zweiten Ende (5b) des Ventilnadelschaftes (5) hin zeigt.

7. Dosiervorrichtung nach Anspruch 6,
**dadurch gekennzeichnet, dass**
besagte Dichtungsfläche (7c) einen kegelförmigen Querschnitt hat, der so angepasst ist, dass er zum kegelförmigen Anteil (6) der Ventilnadel passt.

8. Dosiervorrichtung nach Anspruch 6 oder 7,
**dadurch gekennzeichnet, dass**
besagte vorspringende Fläche (7d) nach innen über die zweite Fläche (7b) vorspringt, so dass während eines Montageprozesses, bei dem das erste Ende (5a) des Ventilnadelschaftes (5) durch die Durchgangsbohrung (7) des elastischen Innenrings (2) von dessen Unterseite her geführt wird, der kegelförmige Anteil (6) der Ventilnadel besagten elastischen Innenring (2) so sehr nach außen biegt, dass sein Dichtungsabschnitt (7c) einen größeren Durchmesser als ein ihm gegenüber angeordneter Abschnitt des kegelförmigen Anteils (6) hat, wobei dieser Durchmesser kleiner als der ihm gegenüber angeordnete Abschnitt des kegelförmigen Anteils (6) ist, wenn der elastische Innenring (2) nicht nach außen gebogen wird.

9. Dosiervorrichtung nach einem der Ansprüche 6 bis 8,
**dadurch gekennzeichnet, dass**
sich besagte vorspringende Fläche (7d) in montiertem Zustand hinter besagter Bodenfläche (6c) besagten kegelförmigen Anteils in montiertem Zustand einhakt, in dem kein Biegen des elastischen Innenrings (2) auf Grund der vorstehenden Fläche (7d) erfolgt und bei dem die Dichtungsfläche (7c) in abdichtendem Kontakt mit dem kegelförmigen Anteil (6) ist.

## Revendications

1. Dispositif de dosage pour doser un fluide sous pression, en particulier une soupape d'injection pour un système d'injection de carburant dans un moteur à combustion interne comportant :
- une chambre (9) à l'intérieur d'un boîtier (8), contenant ledit fluide sous pression et
- un pointeau de soupape (5, 6) passant à travers ladite chambre, comportant un axe de pointeau de soupape (5) avec une première extrémité (5a) coopérant avec une unité d'actionnement à l'extérieur de ladite chambre et une seconde extrémité (5b) commandant l'ouverture et la fermeture d'une ouverture de dosage,
- un élément de fermeture (1) qui est utilisé en tant qu'élément de traversée pour la première extrémité (5a) dudit axe de pointeau de soupape (5) de l'intérieur de la chambre (9) à l'extérieur (10), dans lequel la pression interne est supérieure à la pression externe et la chambre (9) est fermée de manière hermétique par rapport à l'extérieur,
**caractérisé en ce que** ledit élément de fermeture (1) comprend un anneau externe (4) fixé au boîtier (8) d'une manière hermétique, un anneau élastique interne (2) fixé à l'axe de pointeau de soupape (5) fournissant une connexion d'étanchéité métal sur métal sans aucun joint soudé entre l'axe de pointeau de soupape (5) et l'anneau élastique interne (2) et une membrane (3) reliant l'anneau externe (4) et l'anneau élastique interne (2).

2. Dispositif de dosage selon la revendication 1, **caractérisé en ce que** ledit anneau externe (4) et/ou ledit anneau élastique interne (2) et/ou ladite membrane (3) sont en métal.

3. Dispositif de dosage selon la revendication 1 ou 2, **caractérisé en ce que** ladite membrane (3) comporte une section transversale qui permet un soudage au dit anneau externe (4) et/ou au dit anneau élastique interne (2) de telle sorte que le fluide à haute pression à l'intérieur de la chambre (9) applique principalement une contrainte de cisaillement sans contraintes de flexion aux soudures.

4. Dispositif de dosage selon la revendication 3, **caractérisé en ce que** ladite membrane (3) comporte une section transversale en demi-cercle fléchissant vers l'extérieur à partir de ladite chambre (9) dans un état assemblé.

5. Dispositif de dosage selon l'une quelconque des revendications 1 à 4, **caractérisé en ce que** ledit anneau élastique interne (2) fournit une fixation du genre clip à une partie conique (6) du pointeau de soupape dans un état assemblé de telle sorte qu'une extrémité supérieure (6a) de la partie conique, qui présente un diamètre correspondant à celui de l'axe de pointeau de soupape (5), est dirigée vers la première extrémité (5a) de l'axe de pointeau de soupape (5) et une extrémité de base (6b) de la partie conique (6), qui a un diamètre supérieur à celui de l'axe de pointeau de soupape (5) de telle sorte qu'une partie inférieure de cône (6c) soit réalisée sous la forme d'une partie saillant dudit axe de pointeau de soupape (5), est dirigée vers la seconde extrémité (5b) de l'axe de pointeau de soupape (5).

6. Dispositif de dosage selon la revendication 5, **caractérisé en ce que** ledit anneau élastique interne (2) comprend un trou débouchant (7) comportant :
- une première surface (7a) avec un premier diamètre interne supérieur à un diamètre de l'axe de pointeau de soupape (5) et inférieur à celui de l'extrémité de base (6b) de la partie conique (6), prévue sur un côté supérieur de l'anneau élastique interne (2), qui est dirigée vers la première extrémité (5a) de l'axe de pointeau de soupape (5) dans un état assemblé,
- une seconde surface (7b), avec un second diamètre interne supérieur à celui de l'extrémité de base (6b) de la partie conique (6), prévue au centre de l'anneau élastique interne (2),
- une surface d'étanchéité (7c) reliant la première surface (7a) et la seconde surface (7b) et
- une surface en saillie (7d), avec un troisième diamètre interne supérieur à un diamètre de l'axe de pointeau de soupape (5) et inférieur à celui de l'extrémité de base (6b) de la partie conique (6), prévue entre la seconde surface (7b) et un côté inférieur de l'anneau élastique interne (2), qui est dirigée vers la seconde extrémité (5b) de l'axe de pointeau de soupape (5) dans un état assemblé.

7. Dispositif de dosage selon la revendication 6, **caractérisé en ce que** ladite surface d'étanchéité (7c) comporte une section transversale conique adaptée de manière à s'ajuster à la partie conique (6) du pointeau de soupape.

8. Dispositif de dosage selon la revendication 6 ou 7, **caractérisé en ce que** ladite surface en saillie (7d) s'avance vers l'intérieur au-dessus de la seconde surface (7b) de telle sorte que, pendant un processus d'assemblage, dans lequel la première extrémité (5a) de l'axe de pointeau de soupape (5) est guidée à travers le trou débouchant (7) de l'anneau élastique interne (2) en provenance du côté inférieur de celui-ci, la partie conique (6) du pointeau de soupape fléchit ledit anneau élastique interne (2) vers l'extérieur dans une proportion telle que sa section d'étanchéité (7c) comporte un diamètre supérieur à une section de la partie conique (6), disposée à l'opposé, lequel diamètre est inférieur à la section de la partie conique (6), disposée à l'opposé, lorsqu'aucune flexion extérieure n'est réalisée.

9. Dispositif de dosage selon l'une quelconque des revendication 6 à 8, **caractérisé en ce que** ladite surface en saillie (7d) s'accroche derrière ladite surface inférieure (6c) de ladite partie conique dans un état assemblé dans lequel aucune flexion de l'anneau élastique interne (2) n'est réalisée du fait de la surface en saillie (7d) et dans lequel la surface d'étanchéité (7c) comporte un contact d'étanchéité avec la partie conique (6).
